# EUROPÄISCHE PATENTSCHRIFT

(11) **EP 2 984 449 B1**
(45) Veröffentlichungstag und Bekanntmachung des Hinweises auf die Patenterteilung: **13.06.2018**
(21) Anmeldenummer: 14717717.4
(22) Anmeldetag: 07.04.2014
(51) Int. Cl.: G01C 19/5719, G01C 19/5712, G01C 19/574

(54) **DREHRATENSENSOR**
RATE OF ROTATION SENSOR
CAPTEUR DE VITESSE DE ROTATION

(30) Priorität: 11.04.2013 DE 102013206414
(43) Veröffentlichungstag der Anmeldung: 17.02.2016
(73) Patentinhaber: Robert Bosch GmbH, 70442 Stuttgart (DE)
(72) Erfinder: REINMUTH, Jochen, 72766 Reutlingen (DE)
(86) Internationale Anmeldenummer: PCT/EP2014/056892
(87) Internationale Veröffentlichungsnummer: WO 2014/166851

(56) Entgegenhaltungen:
- US-A1- 2003 164 041
- US-A1- 2008 115 579
- US-A1- 2010 095 770

## Beschreibung

### Stand der Technik

Die Erfindung geht aus von einer mikromechanischen Struktur gemäß dem Oberbegriff des unabhängigen Anspruchs.

Mikromechanische Strukturen sind aus dem Stand der Technik hinlänglich bekannt und werden beispielsweise für Beschleunigungs- oder Drehratensensoren verwendet. US 2003/0164041 (Jeong et al.), US 2010/0095770 (Hsu), und US 2008/0115579 (Seeger et al.), zum Beispiel, offenbaren solche mikromechanische Strukturen. Mickro-mechanische Strukturen umfassen üblicherweise bewegliche Siliziumstrukturen, die durch ein Ätzverfahren erzeugt werden, wobei Gräben, sogenannte Trenches, mit hohem Aspektverhältnis, also einem großen Verhältnis der Tiefe der Gräben zu ihrer lateralen Ausdehnung, in eine Siliziumschicht geätzt werden und gegebenenfalls weitere Schichten unterhalb der beweglichen Strukturen entfernt werden. Anschließend können die beweglichen Strukturen durch ein über ein Bondverfahren aufgebrachtes Kappensubstrat gegen mechanische Einflüsse geschützt werden.

Problematisch ist dabei, dass die Trenches fertigungsbedingt üblicherweise keine geraden, insbesondere keine senkrechten Wände aufweisen, sondern durch die Natur des Ätzprozesses ein sogenannter Trenchwinkel nicht vermieden werden kann. Weiterhin werden die fertigen mikromechanischen Strukturen oftmals zum Schutz vor Beschädigungen und/oder äußeren Einflüssen in ein Gehäuse eingebaut und/oder auf eine Leiterplatte aufgelötet. Dadurch werden die mikromechanischen Strukturen Verspannungen ausgesetzt, insbesondere Verbiegungen, sowohl statischen Verspannungen als auch temperaturabhängigen Verspannungen.

Drehratensensoren sind ebenfalls aus dem Stand der Technik bekannt. Dafür werden zunehmend mikromechanische Strukturen eingesetzt. Üblicherweise werden in Drehratensensoren zwei Massen zu einer antiparallelen Bewegung angetrieben. Wirkt eine Drehrate senkrecht zu der Bewegungsrichtung auf die Massen, werden diese durch die Corioliskraft ausgelenkt. Diese Auslenkung wird gemessen und daraus kann dann auf die Drehrate geschlossen werden. Durch die antiparallele Auslenkung der Massen kann dabei zwischen einer Linearbeschleunigung und einer Drehrate unterschieden werden. Es ist bekannt, die zur Lagerückstellung benötige, insbesondere elektrostatische, Gegenkraft zu messen (closed-loop Regelung) oder die durch eine Abstandsänderung zu einer Struktur induzierte Kapazitätsänderung (open-loop Betrieb).

Durch die oben angesprochenen Fertigungsungenauigkeiten ist es schwierig, Bewegungen exakt parallel zu einer Ebene zu realisieren, da durch die Streuung der Trenchwinkel um eine Richtung auch Bewegungskomponenten senkrecht zu der gewünschten Bewegungsrichtung auftreten. Dies führt zu einer Taumelbewegung, die ihrerseits ein Fehlsignal verursacht, die sogenannte Quadratur.

### Offenbarung der Erfindung

Die erfindungsgemäße mikromechanische Struktur gemäß den nebengeordneten Ansprüchen hat gegenüber dem Stand der Technik den Vorteil, dass sie keine oder zumindest eine deutlich geringere Quadratur aufweist und zudem sehr unempfindlich gegenüber mechanischen und/oder temperaturinduzierten Verspannungen, insbesondere Verbiegungen, ist. Darüber hinaus ist die erfindungsgemäße mikromechanische Struktur bauraumkompakt ausgebildet, wodurch Herstellungs- und Materialkosten eingespart werden. Weiterhin bedient sich die erfindungsgemäße mikromechanische Struktur bereits bekannter und etablierter Herstellungsverfahren, so dass sie einfach und kostengünstig produzierbar ist. Vorzugsweise sind das erste Corioliselement und das zweite Corioliselement derart stark gekoppelt, dass sie quasi als starrer Körper wirken, wodurch in vorteilhafter Weise besonders einfach Fehlsignale vermieden werden können, da die Bewegung der Massen nun wie die Bewegung einer einzelnen Masse verläuft und sich dadurch mögliche Fehler kompensieren. Dadurch, dass das erste Corioliselement und das zweite Corioliselement gleich aufgebaut sind, also insbesondere massensymmetrisch zueinander ausgebildet sind, und sich synchron bewegen, wobei ihre gemeinsame Haupterstreckungsebene stets erhalten bleibt, kompensieren sich mögliche Fehler und ein Fehlsignal kann somit ausgeschlossen werden. Die Rotationsschwingung um die erste Achse ermöglicht eine nahezu taumelfreie Bewegung selbst bei einer vergleichsweise großen Streuung der Trenchwinkel. Zusätzlich kann eine Auslenkung parallel zu der Haupterstreckungsebene des Substrats sehr genau gemessen werden, so dass durch die erfindungsgemäße mikromechanische Struktur eine besonders genaue Messung einer anliegenden Drehrate möglich ist. Besonders bevorzugt sind das erste und das zweite Auslenkungselement derart stark gekoppelt, dass sie quasi als starrer Körper wirken, insbesondere sind das erste und das zweite Auslenkungselement als ein gemeinsames Auslenkungselement ausgebildet. Hierdurch werden Fehler vorteilhafterweise noch besser kompensiert. Ganz besonders bevorzugt sind das erste Corioliselement und das zweite Corioliselement im Wesentlichen nahe der ersten Achse oder über an der Achse angeordnete Mittel, insbesondere Torsionsfedern, mit dem Substrat verbunden. Hierdurch wird in besonders vorteilhafter Weise eine freie und von Störungen unbeeinflusste Bewegung ermöglicht.

Vorteilhafte Ausgestaltungen und Weiterbildungen der Erfindung sind den Unteransprüchen, sowie der Beschreibung unter Bezugnahme auf die Zeichnungen entnehmbar.

Gemäß einer bevorzugten Ausführungsform umfasst die erste Achse wenigstens eine ein- oder mehrteilige Torsionsfeder, wobei insbesondere die Länge der Torsionsfeder größer als die Höhe der Torsionsfeder und wobei die Höhe der Torsionsfeder größer als die Breite der Torsionsfeder ist. Besonders bevorzugt ist die Torsionsfeder parallel zu der ersten Achse ausgerichtet. Hierdurch ist es in vorteilhafter Weise möglich, die Bewegungen des ersten und zweiten Corioliselements und/oder die Bewegungen des ersten und zweiten Auslenkungselements miteinander zu koppeln. Torsionsfedern sind besonders einfach und bauraumkompakt als in die mikromechanische Struktur integrierte Bauelemente herstellbar. Ganz besonders bevorzugt weist die erste Achse eine zweiteilige Torsionsfeder auf, wobei der erste Teil massensymmetrisch zu dem zweiten Teil ausgestaltet ist. Hierdurch wird eine noch höhere Symmetrie der mikromechanischen Struktur, gerade in Bezug auf die durch die Kraftwirkung der Corioliskraft bewirkte Auslenkung, ermöglicht, was die Quadratur weiter verringert.

Gemäß einer bevorzugten Ausführungsform ist die mikromechanische Struktur durch einen oberflächenmikromechanischen Prozess herstellbar. Hierdurch wird es vorteilhafterweise ermöglicht, bei der Herstellung der mikromechanische Struktur auf bekannte und bewährte Verfahren zurückzugreifen, was geringe Kosten bei der Herstellung ermöglicht.

Gemäß der Erfindung weist die Antriebseinrichtung Elektroden auf, insbesondere in der Nähe der ersten Achse befindliche Flächenelektroden mit einer Haupterstreckungsebene parallel zu der Haupterstreckungsebene des Substrats, wobei die Entfernung der Antriebseinrichtung zu der ersten Achse vorzugsweise weniger als 40% der Erstreckung des ersten und/oder zweiten Corioliselements entlang der zweiten Achse, besonders bevorzugt weniger als 30% und ganz besonders bevorzugt weniger als 20% beträgt. Hierdurch ist es in vorteilhafter Weise möglich, die Antriebseinrichtung bauraumkompakt zu gestalten und einen weitestgehend störungsfreien Antrieb des ersten und zweiten Corioliselements zu gewährleisten. Eine Anordnung nahe der ersten Achse ermöglicht vorteilhafterweise eine zentrale Befestigung der Strukturen am Substrat, wodurch insbesondere aus Verspannungen (insbesondere einem Verbiegen des Substrats) resultierende Störsignale vermieden oder wenigstens minimiert werden können.

Gemäß einer bevorzugten Ausführungsform weist die Detektionseinrichtung Elektroden auf. Besonders bevorzugt weist die Detektionseinrichtung in einer Kammstruktur angeordnete erste Fingerelektroden auf, wobei das erste Auslenkungselement und das zweite Auslenkungselement in die ersten Fingerelektroden eingreifende zweite Fingerelektroden aufweisen. Hierdurch ist in besonders vorteilhafter Weise eine sehr genaue Detektion möglich, was in einer sehr genauen Messung der Drehrate resultiert. Sowohl im open-loop Betrieb als auch im closed-loop Betrieb weisen die kammartigen ineinander eingreifenden Fingerelektroden eine hohe Sensitivität auf. Ganz besonders bevorzugt weisen auch das erste und zweite Corioliselement in entsprechende Gegenelektroden der Detektionseinrichtung eingreifendende Fingerelektroden auf. Durch den Vergleich der Signale von den Corioliselementen und den Auslenkungselementen wird eine noch genauere Messung und Fehlsignalkompensation ermöglicht. Noch mehr bevorzugt sind mindestens zwei, insbesondere vier oder mehr kammartig angeordnete Fingerelektroden vorgesehen, wobei diese insbesondere derart angeordnet sind, dass jeweils zwei Kammstrukturen auf der Seite des ersten Corioliselements jeweils zwei Kammstrukturen auf der Seite des zweiten Corioliselements gegenüberliegen und die jeweils zwei Kammstrukturen eines Corioliselements derart konfiguriert sind, dass die Differenz der Signale der jeweils zwei Kammstrukturen als Signal für die Drehrate bestimmt wird. Durch die hohe Symmetrie der Anordnung wird die mikromechanische Struktur in besonders vorteilhafter Weise noch unempfindlicher gegenüber von außen anliegenden Störungen, insbesondere Störsignalen.

Gemäß einer bevorzugten Ausführungsform sind die Detektionseinrichtung und/oder das erste Corioliselement und das zweite Corioliselement und/oder insbesondere das erste Auslenkungselement und das zweite Auslenkungselement im Wesentlichen umfänglich um wenigstens eine zentrale Substrataufhängung angeordnet. Dies bedeutet, dass das erste und zweite Corioliselement und/oder das erste und zweite Auslenkungselement eine Ringstruktur um die Detektionseinrichtung bilden. Insbesondere ist daher die Aufhängung der einzelnen Elemente an dem Substrat nahe des Zentrums der mikromechanischen Struktur, insbesondere nahe der Mitte der ersten Achse, angeordnet. Hierdurch ist in besonders vorteilhafter Weise eine zentrale Anbindung an das Substrat möglich, wodurch eine besonders hohe Unempfindlichkeit gegen Verspannungen, insbesondere Verbiegen, ermöglicht wird.

Gemäß einer bevorzugten Ausführungsform weist das erste Corioliselement mehrere Segmente auf und weist das zweite Corioliselement mehrere Segmente auf, wobei insbesondere benachbarte Segmente des ersten Corioliselements durch Torsionsfedern gekoppelt sind und benachbarte Segmente des zweiten Corioliselements durch Torsionsfedern gekoppelt sind. Hierdurch ist es in vorteilhafter Weise möglich, durch die resonante Kopplung der Segmente eine besonders starke Auslenkung des ersten und zweiten Corioliselements zu ermöglichen, wodurch vorteilhafterweise auch kleine Signale besser detektierbar sind.

Gemäß der Erfindung weist das Substrat derartige Ausnehmungen auf, dass das erste Corioliselement und das zweite Corioliselement einen größeren maximalen Auslenkwinkel der Rotationsschwingung aufweisen als es ohne Ausnehmungen der Fall ist. Besonders bevorzugt sind diese Ausnehmungen als Kavernen ausgebildet, insbesondere mit einem U-förmigen Querschnitt. Ganz besonders bevorzugt ist der Boden der Kaverne zur ersten Achse hin ansteigend vorgesehen. Es ist jedoch auch denkbar, dass die Ausnehmungen nur sehr lokal und/oder unregelmäßig geformt vorgesehen sind, wobei sie stets derart ausgebildet sind, dass das erste und zweite Corioliselement einen größeren maximalen Auslenkwinkel der Rotationsschwingung aufweisen. Hierdurch wird dem ersten und zweiten Corioliselement gegenüber einer ansonsten gleichen Ausbildung der mikromechanischen Struktur vorteilhafterweise ein größerer Rotationswinkel ermöglicht, was zu einer größeren Amplitude der Antriebsbewegung und damit zu einem besseren Signal-Rausch-Verhältnis führt.

Gemäß einer bevorzugten Ausführungsform ist die Kopplung des ersten Corioliselements und des zweiten Corioliselements mit dem Substrat weich bezüglich einer Rotationsschwingung um die erste Achse und bezüglich einer Rotationsschwingung um die dritte Achse und hart bezüglich einer Rotationsschwingung um die zweite Achse ausgebildet, und die Kopplung des ersten Auslenkungselements und des zweiten Auslenkungselements mit dem Substrat ist weich bezüglich einer Rotationsschwingung um die dritte Achse und hart bezüglich einer Rotationsschwingung um die erste Achse und bezüglich einer Rotationsschwingung um die zweite Achse ausgebildet, und die Kopplung des ersten Auslenkungselements mit dem ersten Corioliselement und des zweiten Auslenkungselements mit dem zweiten Corioliselement ist weich bezüglich einer Rotationsschwingung um die erste Achse und hart bezüglich einer Rotationsschwingung um die zweite Achse und bezüglich einer Rotationsschwingung um die dritte Achse ausgebildet. Insbesondere ist mit einer weich ausgebildeten Kopplung eine gegenüber einer hart ausgebildeten Kopplung geringere Federkonstante einer die Kopplung vermittelnden Anbindung, insbesondere eine Torsionsfeder oder eine Biegefeder, gemeint. Besonders bevorzugt unterscheidet sich die relevante Federkonstante zwischen einer weich ausgebildeten und einer hart ausgebildeten Kopplung wenigstens um einen Faktor zwei, wenigstens einen Faktor fünf oder um wenigstens eine oder wenigstens zwei Größenordnungen. Hierdurch ist es in vorteilhafter Weise möglich, Fehlsignale auszuschließen oder wenigstens zu minimieren, da die Detektionseinrichtung besonders empfindlich ist bezüglich der Rotationsschwingung des ersten und zweiten Auslenkungselements um die dritte Achse und besonders unempfindlich bezüglich anderer Auslenkungen, insbesondere bezüglich Rotationsschwingungen um die erste Achse. Insbesondere wird somit ein Einfluss der Rotationsschwingung des ersten und zweiten Corioliselements um die erste Achse auf das Detektionssignal weitgehend ausgeschlossen. Vorzugsweise ist die die Kopplung bezüglich der ersten Achse vermittelnde Torsionsfeder im Querschnitt, d.h. in einer Ebene senkrecht zur ersten Achse, kreuzförmig ausgebildet oder T-förmig oder umgekehrt T-förmig. Hierdurch wird in besonders vorteilhafter Weise eine gute Beweglichkeit bezüglich der Rotationsschwingung des ersten und zweiten Corioliselements um die erste Achse und gleichzeitig eine gute Kraftübertragung auf das erste und zweite Auslenkungselement bezüglich der Rotationsschwingung um die dritte Achse ermöglicht. Durch die T-Form ist die Torsionsfeder vorteilhafterweise besonders einfach und im Fall der umgekehrten T-Form ohne zusätzliche Verfahrensschritte herstellbar, insbesondere aus der Polysiliziumschicht herstellbar.

### Kurze Beschreibung der Zeichnungen

- **Figuren 1 bis 3**: zeigen Prinzipdarstellungen herkömmlicher mikromechanischer Strukturen in Form von Schnittdarstellungen.
- **Figuren 4a bis 4d und 5a bis 5b**: zeigen Prinzipdarstellungen herkömmlicher Drehratensensoren in Form von Schnittdarstellungen.
- **Figuren 6a bis 6d**: zeigen schematische Prinzipdarstellungen gemäß einer beispielhaften ersten Ausführungsform der erfindungsgemäßen mikromechanischen Struktur.
- **Figuren 7a bis 7b**: zeigen schematische Darstellungen gemäß einer beispielhaften zweiten Ausführungsform der erfindungsgemäßen mikromechanischen Struktur.
- **Figuren 8a bis 8d**: zeigen schematische Darstellungen gemäß einer beispielhaften dritten Ausführungsform der erfindungsgemäßen mikromechanischen Struktur.
- **Figur 9**: zeigt eine schematische Darstellung gemäß einer beispielhaften vierten Ausführungsform der erfindungsgemäßen mikromechanischen Struktur.
- **Figur 10**: zeigt eine schematische Darstellung gemäß einer beispielhaften fünften Ausführungsform der erfindungsgemäßen mikromechanischen Struktur.
- **Figur 11a bis 15**: zeigen schematische Darstellungen gemäß beispielhafter Ausführungsvarianten der erfindungsgemäßen mikromechanischen Struktur hinsichtlich der Torsionsfeder am Beispiel der ersten Ausführungsform.

### Detaillierte Beschreibung der Zeichnungen

Die vorliegende Erfindung wird mit Bezug auf besondere Ausführungen und mit Bezug zu den beiliegenden Zeichnungen beschrieben, wobei jedoch die Erfindung nicht auf diese Ausführungen und auf diese Zeichnungen beschränkt ist, sondern durch die Patentansprüche bestimmt ist. Die Zeichnungen sind nicht beschränkend zu interpretieren. In den Zeichnungen können zu Darstellungszwecken bestimmte Elemente vergrößert bzw. übertrieben sowie nicht maßstabsgerecht dargestellt sein.

Falls nichts anderes spezifisch angegeben wird, umfasst die Verwendung eines unbestimmten oder bestimmten Artikels mit Bezug auf ein Wort in der Einzahl, beispielsweise "ein", "eine", "eines", "der", "die", "das", auch die Mehrzahl eines solchen Wortes. Die Bezeichnungen "erster", "erste", "erstes", "zweiter", "zweite", "zweites" und so fort in der Beschreibung und in den Ansprüchen werden zur Unterscheidung zwischen ähnlichen oder zu unterscheidenden gleichen Elementen verwendet und nicht zwingend zur Beschreibung einer zeitlichen oder sonstigen Abfolge. Die derart benutzten Begriffe sind grundsätzlich als unter entsprechenden Bedingungen austauschbar anzusehen.

In den verschiedenen Figuren sind gleiche Teile stets mit den gleichen Bezugszeichen versehen und werden daher in der Regel auch jeweils nur einmal benannt bzw. erwähnt.

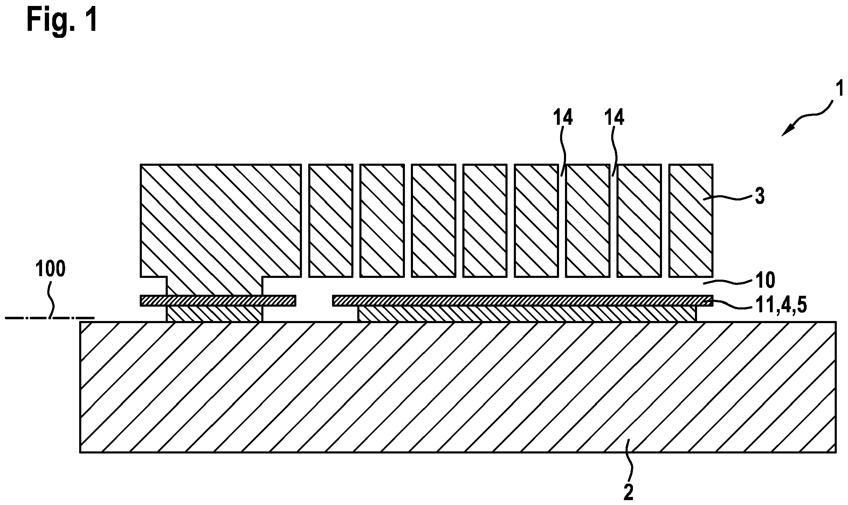

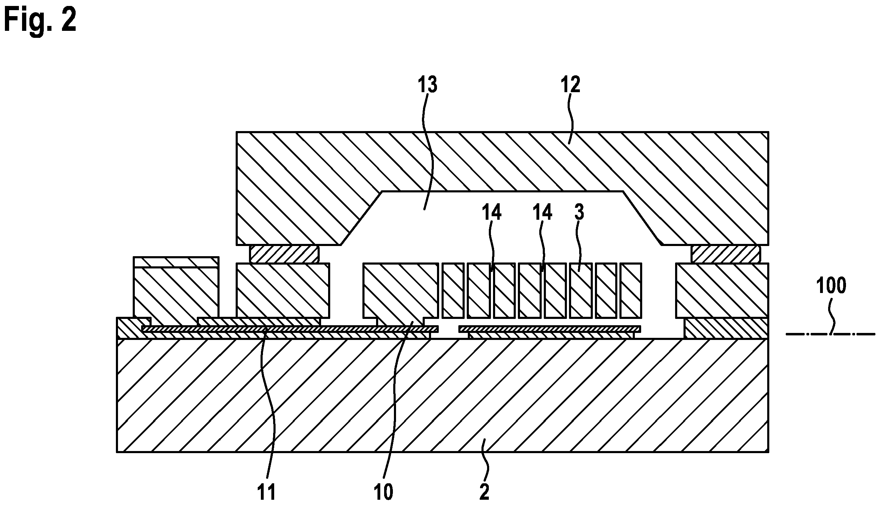

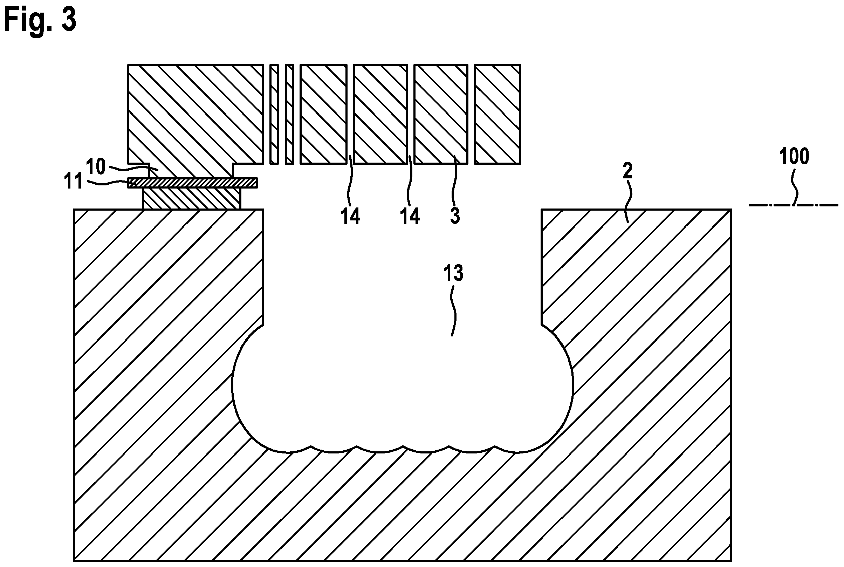

In **Figur 1** ist eine Prinzipdarstellung einer herkömmlichen mikromechanischen Struktur 1 gezeigt. Eine bewegliche Struktur, beispielsweise ein Corioliselement 3 weist mehrere Gräben 14 (auch Trenches genannt) auf, die durch Ätzschritte in einer Siliziumschicht erzeugt werden. Eine Opferschicht 10, insbesondere eine Oxidschicht, wird unter der Siliziumschicht entfernt, um die Beweglichkeit der beweglichen Struktur zu ermöglichen. Die bewegliche Struktur kann durch eine oder mehrere Polysiliziumschichten 11 von einem Substrat, üblicherweise einem Siliziumsubstrat, getrennt werden. Die Polysiliziumschichten übernehmen dabei verschiedene Funktionen. So kann die bewegliche Struktur über eine Polysiliziumschicht mit dem Substrat verbunden sein, man spricht dann von einer Substrataufhängung, oder eine Polysiliziumschicht kann durch weitere Schritte derart segmentiert werden, dass sie als Elektrode oder als Leiterbahn dient. Insbesondere können so beispielsweise Flächenelektroden als Antriebseinrichtung 5 geschaffen werden. In **Figur 2** ist im Wesentlichen die gleiche mikromechanische Struktur 1 wie in Figur 1 gezeigt, wobei die bewegliche Struktur durch ein Kappensubstrat 12 geschützt wird, welches über ein bekanntes Bondverfahren auf der Siliziumschicht, aus der auch die bewegliche Struktur gefertigt wurde, befestigt wird. Außerdem kann so eine gewisse Bewegungsfreiheit der beweglichen Struktur auf der dem Substrat 2 abgewandten Seite realisiert werden. In **Figur 3** ist erneut eine ähnliche mikromechanische Struktur 1 wie in den Figuren 1 und 2 dargestellt. Im Unterschied zu den oben beschriebenen Figuren weist die mikromechanische Struktur 1 in **Figur 3** eine Kaverne 13 in dem Substrat 2 auf, wodurch die Bewegungsfreiheit auch in die Richtung der dem Substrat zugewandten Seite erhöht wird.

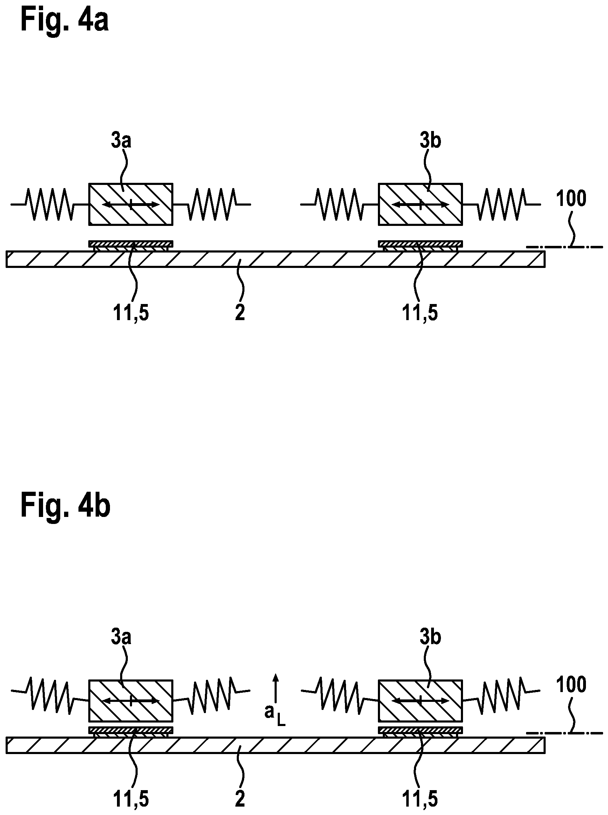

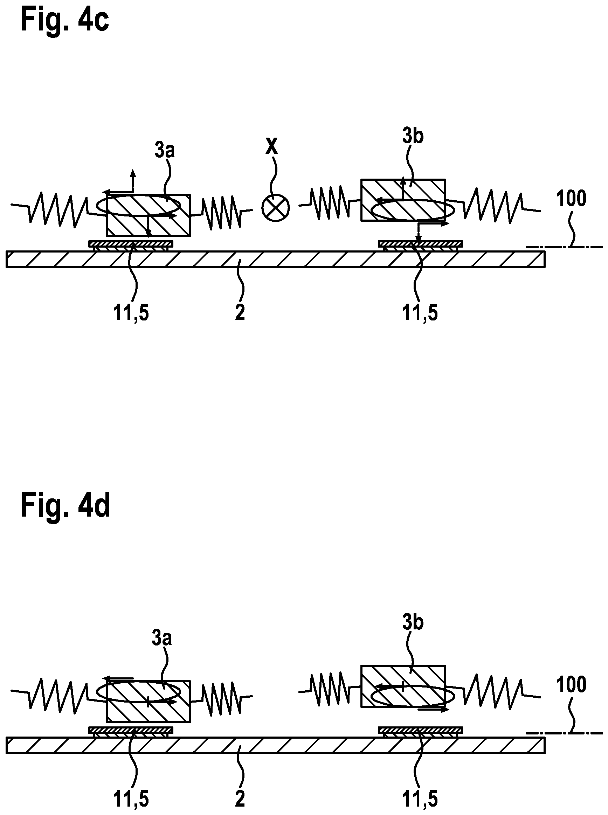

In **Figur 4a** ist eine Prinzipskizze eines herkömmlichen Drehratensensors dargestellt. Ein erstes Corioliselement 3a und ein zweites Corioliselement 3b werden antiparallel zueinander und parallel zu der Haupterstreckungsebene 100 des Substrats 2 angetrieben. Die antiparallele Bewegung, welche das erste Corioliselement 3a und das zweite Corioliselement 3b durchführen, wird durch waagrechte Pfeile dargestellt. In **Figur 4b** ist die Wirkung einer linearen Beschleunigung a_{L}, deren Richtung durch den nach oben weisenden Pfeil angezeigt wird, auf das erste Corioliselement 3a und das zweite Corioliselement 3b dargestellt, während in **Figur 4c** die Wirkung, auf Grund der Coriolisbeschleunigung, einer Drehrate X um eine Achse senkrecht zu der Zeichenebene dargestellt ist. Diese Drehrate X ist durch ein Kreuz in einem Kreis gekennzeichnet. Das erste Corioliselement 3a wird beispielsweise nach rechts ausgelenkt, wodurch die wirkende Drehrate X eine Corioliskraft auf das erste Corioliselement 3a bewirkt, deren Richtung nach unten, also auf das Substrat 2 hin, weist. Dementsprechend wird das zweite Corioliselement 3b in seiner Bewegung in der Zeichenebene nach links durch eine auf das zweite Corioliselement 3b wirkende Corioliskraft mit einer Richtung nach oben ausgelenkt. Durch den Vergleich der **Figuren 4b** und **4c** wird deutlich, dass durch die antiparallel angetriebene Bewegung des ersten und zweiten Corioliselements 3a,3b eine Linearbeschleunigung a_{L} von einer Drehrate X unterschieden werden kann, da im Fall einer wirkenden Drehrate auch die Auslenkung des ersten Corioliselements 3a und die Auslenkung des zweiten Corioliselements 3b antiparallel und senkrecht zur Haupterstreckungsebene 100 erfolgt. In **Figur 4d** ist eine Prinzipdarstellung der Bewegung eines herkömmlichen Drehratensensors unter Einbeziehung von Quadraturkomponenten des ersten Corioliselements 3a und des zweiten Corioliselements 3b gezeigt. Dadurch, dass die Gräben 14 (s. Fig. 1) aus fertigungstechnischen Gründen nicht exakt verlaufen, sondern vielmehr eine Streuung ihrer Winkel vorliegt, führen das erste Corioliselement 3a und das zweite Corioliselement 3b auch ohne eine wirkende Drehrate X keine geradlinige Bewegung, sondern eine Taumelbewegung.

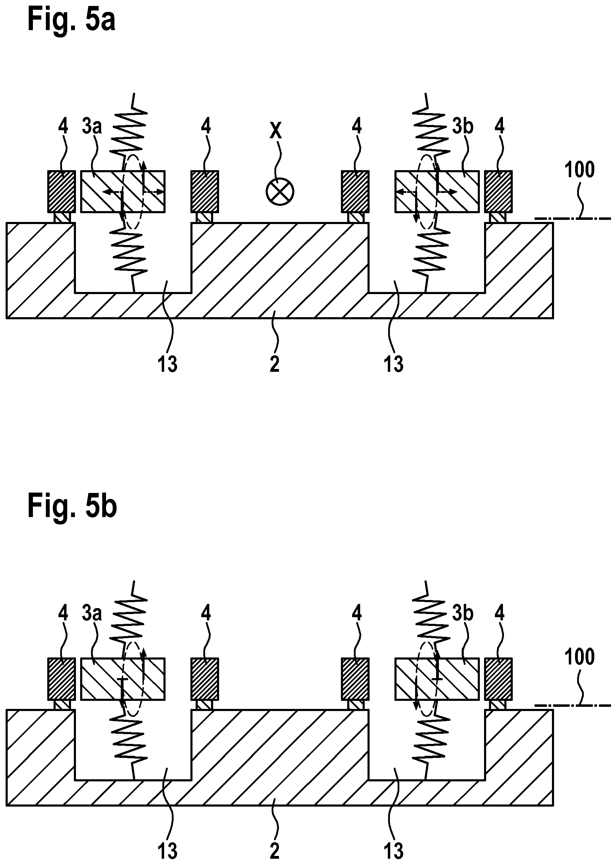

In **Figur 5a** ist eine weitere Prinzipdarstellung herkömmlicher Drehratensensoren gezeigt. Das erste Corioliselement 3a und das zweite Corioliselement 3b werden in dieser Ausführungsform in eine Richtung senkrecht zur Haupterstreckungsebene 100 des Substrats 2 antiparallel angetrieben. Unter der Wirkung einer Drehrate X, deren Achse erneut senkrecht zur Zeichenebene angeordnet ist, werden das erste Corioliselement 3a nach das zweite Corioliselement 3b antiparallel und senkrecht zu der Bewegungsrichtung sowie senkrecht zu der Achse der Drehrate X ausgelenkt. Diese Auslenkungen werden durch Detektionseinrichtungen 4 detektiert. Um ein deutliches Signal zu messen, wird die Bewegungsfreiheit des ersten Corioliselements 3a und des zweiten Corioliselements 3b senkrecht zur Haupterstreckungsebene 100 des Substrats 2 dadurch erhöht, dass das Substrat 2 Kavernen 13 aufweist. In **Figur 5b** ist der gleiche Aufbau ohne eine wirkende Drehrate X gezeigt. Durch die Streuung der Trenchwinkel erfolgt trotz eines Fehlens einer wirkenden Drehrate X eine Taumelbewegung, die derjenigen Bewegung bei einer wirkenden Drehrate X sehr ähnelt. Es wird also durch die Streuung der Trenchwinkel ein Fehlsignal erzeugt, das nur schwer von dem Signal einer Drehrate X zu unterscheiden ist.

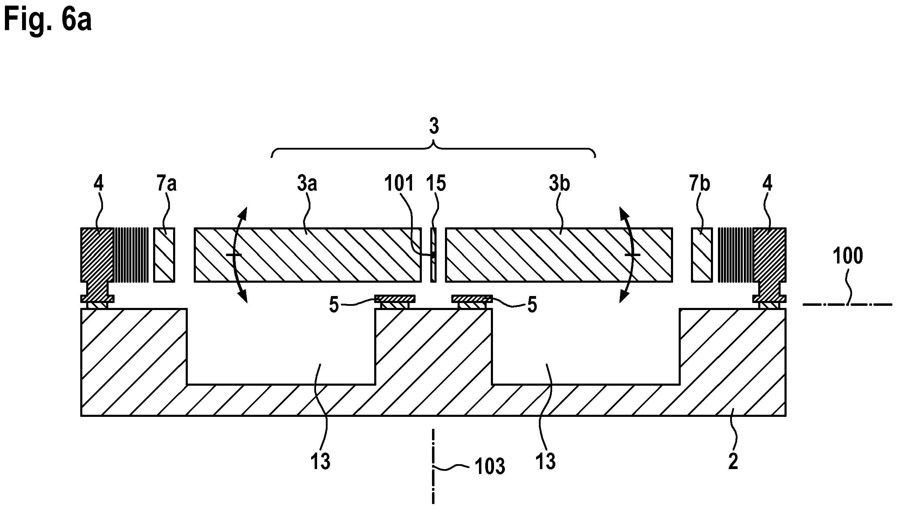

In den **Figuren 6a bis 15** sind schematische Darstellungen gemäß beispielhafter Ausführungsformen der erfindungsgemäßen mikromechanischen Struktur 1 gezeigt. Alle dargestellten Ausführungsformen weisen die folgenden Merkmale auf. Auf einem Substrat 2 sind ein erstes Corioliselement 3a und ein zweites Corioliselement 3b beweglich angeordnet, wobei das erste Corioliselement 3a bezüglich einer parallel zur Haupterstreckungsebene 100 des Substrats 2 verlaufenden ersten Achse 101 im Wesentlichen massensymmetrisch zu dem zweiten Corioliselement 3b ausgebildet ist, wobei ferner das erste Corioliselement 3a und das zweite Corioliselement 3b eine gemeinsame Haupterstreckungsebene aufweisen, wobei die gemeinsame Haupterstreckungsebene in einer Ruhelage des ersten Corioliselements 3a und des zweiten Corioliselements 3b parallel zu der Haupterstreckungsebene 100 des Substrats 2 verläuft, wobei weiterhin das erste Corioliselement 3a und das zweite Corioliselement 3b bezüglich einer senkrecht zur ersten Achse 101 verlaufenden zweiten Achse 102 jeweils massensymmetrisch ausgebildet sind. Das erste Corioliselement 3a und das zweite Corioliselement 3b sind durch Antriebseinrichtungen 5, in den folgenden Figuren dargestellt als Flächenelektroden, zu einer Rotationsschwingung um die erste Achse 101 antreibbar. Weiterhin weist die erfindungsgemäße mikromechanische Struktur 1 Detektionseinrichtungen 4 und ein erstes Auslenkungselement 7a sowie ein zweites Auslenkungselement 7b auf. Das erste Corioliselement 3a und das zweite Corioliselement 3b sind derart stark gekoppelt, dass sie quasi als starrer Körper wirken, das heißt, im vorliegenden Fall weist die mikromechanische Struktur 1 quasi ein Corioliselement 3, umfassend das erste Corioliselement 3a und das zweite Corioliselement 3b, auf, welches mittels der Antriebseinrichtung 5 zu einer Rotationsschwingung um die erste Achse 101 angetrieben wird. Die Aufhängung des ersten Corioliselement 3a und des zweiten Corioliselement 3b erfolgt in allen Ausführungsbeispielen über eine sich entlang der ersten Achse 101 erstreckende Torsionsfeder 15, die vorzugsweise zweiteilig ausgebildet ist, wobei die beiden Teile zueinander massensymmetrisch bezüglich der zweiten Achse 102 sind, um aus einer Asymmetrie resultierende Fehlsignale auszuschließen. Es ist allerdings gemäß weiteren (jedoch nicht dargestellten) Ausführungsformen auch vorgesehen, dass die Aufhängung und Kopplung über zwei oder mehr zueinander und/oder zur ersten Achse 101 massensymmetrisch angeordnete Torsionsfedern 15 erfolgt. Über die Torsionsfeder 15 (und/oder weitere nicht dargestellte Torsionsfedern) ist das erste Auslenkungselement 7a mit den ersten Corioliselement 3a gekoppelt und das zweite Auslenkungselement 7b mit dem zweiten Corioliselement 3b. Vorzugsweise sind auch das erste Auslenkungselement 7a und das zweite Auslenkungselement 7b derart stark gekoppelt, dass sie quasi als starrer Körper wirken, insbesondere als ein Auslenkungsrahmen 7. Analog zu dem Corioliselement 3 wird auch hier zur besseren Beschreibung weiterhin von einem ersten Auslenkungselement 7a und einem zweiten Auslenkungselement 7b gesprochen. Eine Auslenkung des ersten Auslenkungselements 7a und des zweiten Auslenkungselements 7b parallel zu der Haupterstreckungsrichtung 100 des Substrats 2 im Sinne einer Rotationsbewegung um eine senkrecht zu der Haupterstreckungsebene 100 sich erstreckende und durch den Schnittpunkt der ersten Achse 101 und der zweiten Achse 102 verlaufende dritte Achse 103 wird durch Detektionseinrichtungen 4 detektiert. Diese sind in den beispielhaften Ausführungsformen der erfindungsgemäßen mikromechanischen Struktur 1 als kammartige Fingerelektroden ausgebildet, die ineinandergreifend mit entsprechenden Gegenfingerelektroden angeordnet sind. Das erste Auslenkungselement 7a und das zweite Auslenkungselement 7b weisen diese Gegenfingerelektroden auf. Aus Gründen der Übersichtlichkeit ist in keiner der Figuren 6a bis 15 ein Kappensubstrat 12 (vgl. Fig. 2) dargestellt. Vorzugsweise weist jede der erläuterten beispielhaften Ausführungsformen der mikromechanischen Struktur 1 ein Kappensubstrat 12 auf.

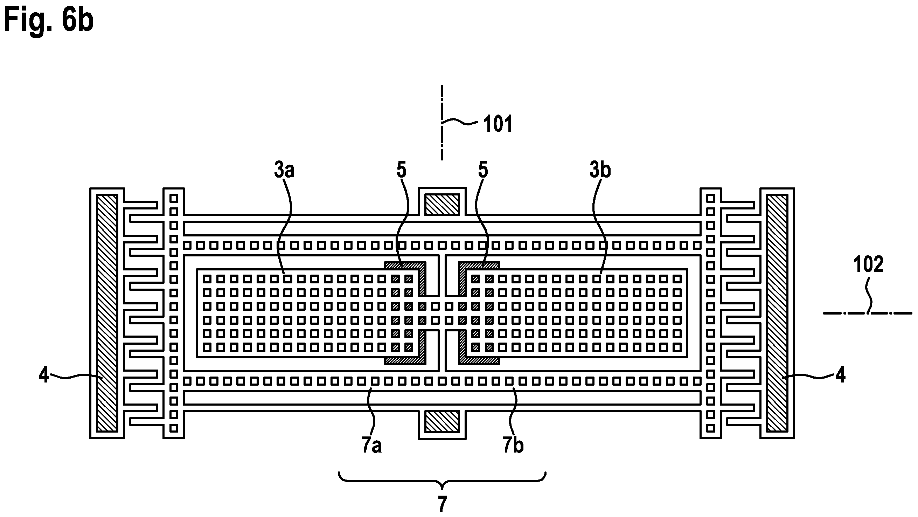

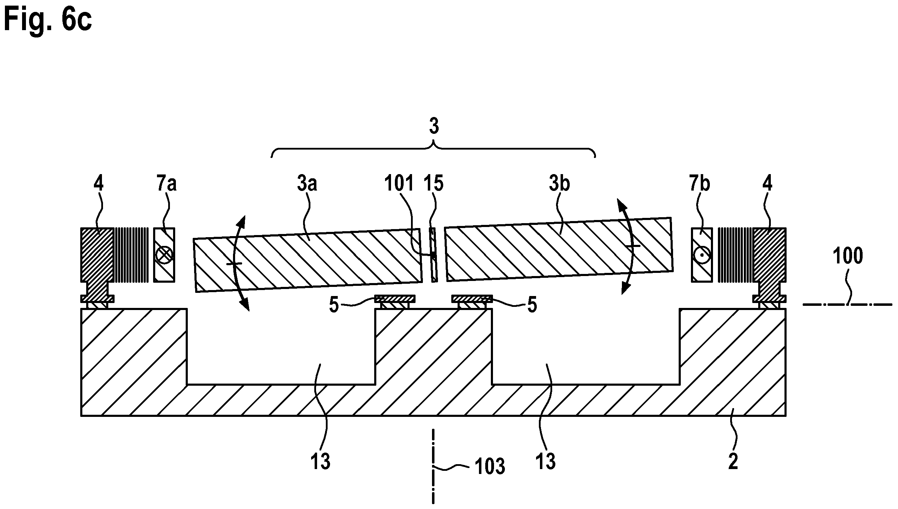

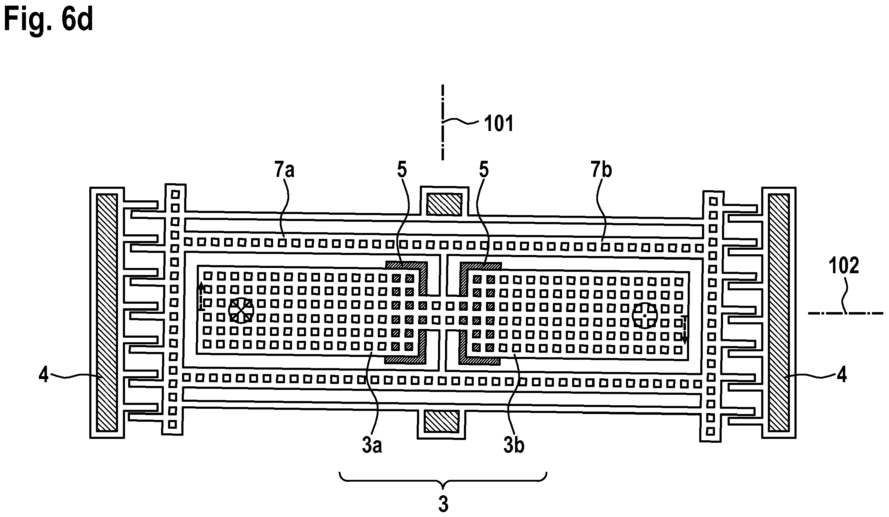

In **Figur 6a** ist eine schematische Darstellung gemäß einer beispielhaften ersten Ausführungsform der erfindungsgemäßen mikromechanischen Struktur 1 in der Ruhelage gezeigt. Die erste Achse 101 verläuft hier senkrecht zur Zeichenebene und sowohl die zweite Achse 102 als auch die Haupterstreckungsebene 100 des Substrats verlaufen waagrecht in der Zeichenebene. Die Rotationsschwingung des ersten Corioliselements 3a und des zweiten Corioliselements 3b ist durch die Pfeile symbolisiert. Zur linken Seite des ersten Corioliselements 3a und zur rechten Seite des zweiten Corioliselements 3b sind Detektionseinrichtungen 4 angeordnet und zwischen der links dargestellten Detektionseinrichtung 4 und dem ersten Corioliselement 3a ist das erste Auslenkungselement 7a angeordnet und zwischen der rechts dargestellten Detektionseinrichtung 4 und dem zweiten Corioliselement 3b ist das zweite Auslenkungselement 7b angeordnet. In **Figur 6b** ist eine Aufsicht einer mikromechanischen Struktur 1 gemäß der beispielhaften ersten Ausführungsform dargestellt. Aus Gründen der Übersichtlichkeit ist das Substrat 2 hier nicht dargestellt. In **Figur 6c** ist die in den **Figuren 6a** und **6b** dargestellte mikromechanische Struktur 1 gemäß der beispielhaften ersten Ausführungsform gezeigt, wobei hier der Fall einer Drehrate X um eine Richtung, welche waagrecht in der Zeichenebene verläuft, dargestellt ist. In diesem Fall wirkt auf das erste Corioliselement 3a und das zweite Corioliselement 3b eine Corioliskraft, wenn diese eine durch die Antriebseinrichtungen 5 angetriebene Rotationsschwingung um die senkrecht auf der Zeichenebene verlaufende erste Achse 101 durchführen. Durch die Corioliskraft erfahren das erste Corioliselement 3a und das zweite Corioliselement 3b eine Auslenkung parallel zu der Haupterstreckungsebene 100 des Substrats 2 im Sinne einer Rotationsbewegung um die dritte Achse 103. Diese dritte Achse 103 verläuft in der Zeichenebene in senkrechter Richtung. Diese Kraftwirkung wird durch eine entsprechende Kopplung an das erste Auslenkungselement 7a und an das zweite Auslenkungselement 7b übertragen, wodurch diese ebenfalls eine Kraftwirkung im Sinne einer Rotationsbewegung um die dritte Achse 103 erfahren. Diese Kraftwirkung kann entweder im closed-loop Betrieb durch eine entsprechende elektrische Gegenkraft durch die Detektionseinrichtungen 4 detektiert werden, oder durch eine Kapazitätsänderung bedingt durch eine Auslenkung der Gegenfingerelektroden des ersten Auslenkungselements 7a und des zweiten Auslenkungselements 7b relativ zu den Fingerelektroden der Detektionseinrichtungen 4 im open-loop Betrieb. In **Figur 6d** ist die gleiche Situation wie in **Figur 6c** in einer Aufsicht senkrecht zur Haupterstreckungsebene 100 dargestellt.

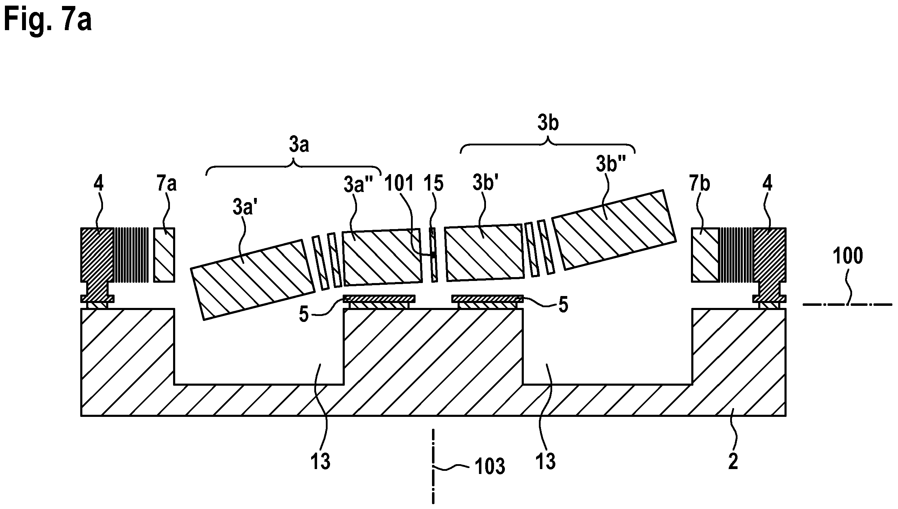

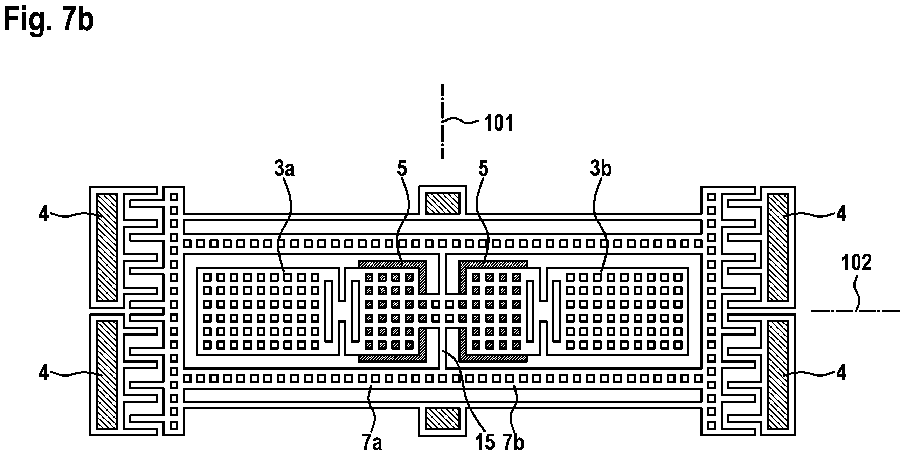

In den **Figuren 7a** und **7b** ist jeweils eine schematische Darstellung einer mikromechanischen Struktur 1 gemäß einer beispielhaften zweiten Ausführungsform dargestellt. Die beispielhafte zweite Ausführungsform entspricht im Wesentlichen der beispielhaften ersten Ausführungsform, wobei das erste Corioliselement 3a und das zweite Corioliselement 3b jeweils mehrere Segmente aufweisen, wobei benachbarte Segmente miteinander gekoppelt sind, insbesondere durch weitere Torsionsfedern. Im Beispiel der Figura 7a und 7b weist das erste Corioliselement 3a ein erstes Segment 3a' und ein zweites Segment 3a" auf. Entsprechend weist das zweite Corioliselement 3b ein drittes Segment 3b' und ein viertes Segment 3b" auf. Hierbei sind die weiteren Torsionsfedern ausgebildet eine Verkippung des ersten Segments 3a' gegenüber dem zweiten Segment 3a" beziehungsweise des dritten Segments 3b' gegenüber dem vierten Segment 3b" um zur ersten Achse 101 parallele Achsen zuzulassen (entsprechend einer vergleichsweise weichen Kopplung) und Relativdrehungen um die anderen Raumrichtungen möglichst zu unterbinden (entsprechend einer vergleichsweise harten Kopplung). Durch die Segmentierung des ersten Corioliselement 3a und des zweiten Corioliselement 3b wird bei einer resonanten Rotationsschwingung erzielt, dass der Schwingungsweg der von der ersten Achse 101 am weitesten entfernten Segmente (erstes Segment 3a' und viertes Segment 3b") erhöht wird, was eine stärkere Kraftwirkung durch die Corioliskraft bewirkt und damit zu einer stärkeren Kraftwirkung im Sinne einer Rotationsschwingung um die dritte Achse 103 des ersten Auslenkungselements 7a beziehungsweise des zweiten Auslenkungselements 7b führt. Dies wiederum bewirkt ein besseres Signal-Rausch-Verhältnis, wodurch die Drehrate X genauer gemessen werden kann und insbesondere auch kleinere Drehraten X gemessen werden können. Weiterhin unterscheidet sich die beispielhafte zweite Ausführungsform von der beispielhaften ersten Ausführungsform der erfindungsgemäßen mikromechanischen Struktur 1 dadurch, dass die mikromechanische Struktur 1 insgesamt vier Detektionseinrichtungen 4 aufweist, wobei bezüglich des ersten Auslenkungselements 7a zwei Detektionseinrichtungen 4 nebeneinander und symmetrisch zur zweiten Achse 102 angeordnet sind und die beiden anderen Detektionseinrichtungen 4 entsprechend symmetrisch zu der ersten Achse 101 angeordnet sind. Dadurch ist durch einen Vergleich der Signale der vier Detektionseinrichtungen 4 eine besonders hohe Unempfindlichkeit gegenüber Fehlsignalen möglich.

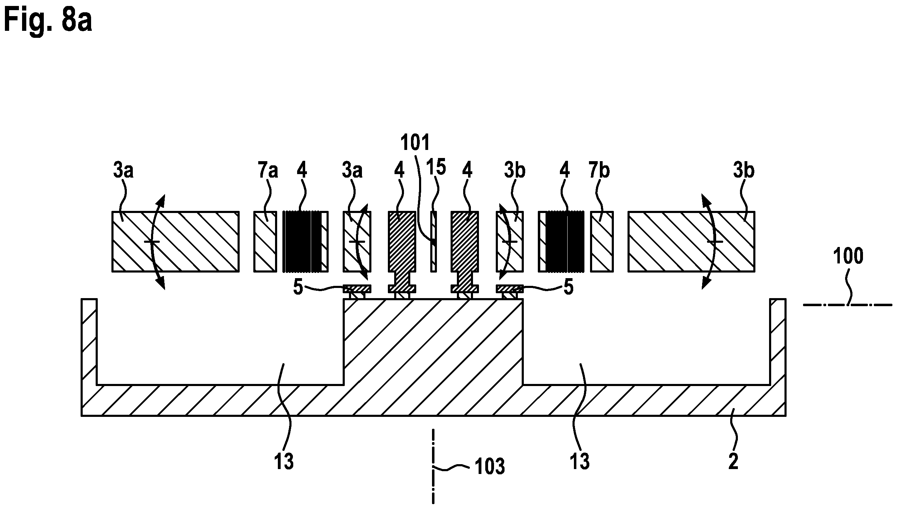

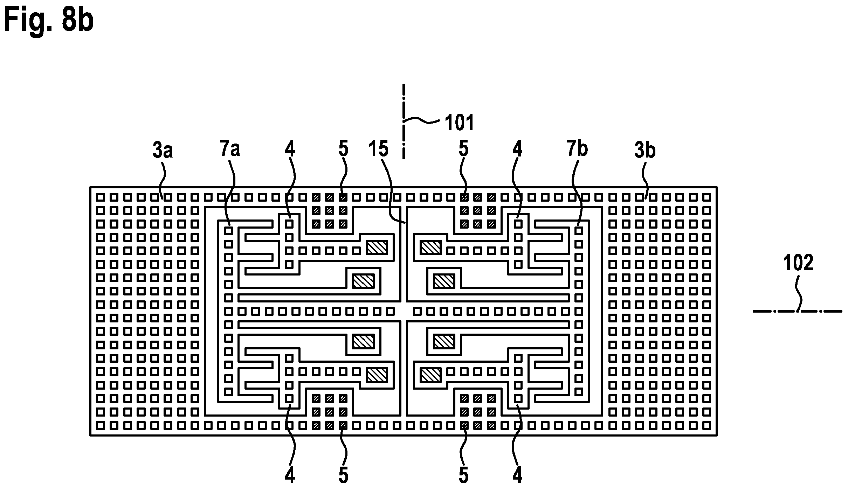

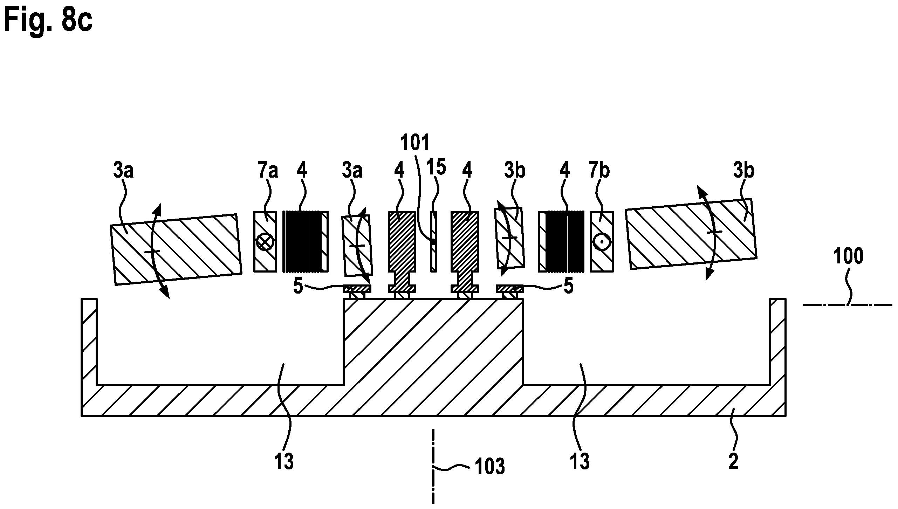

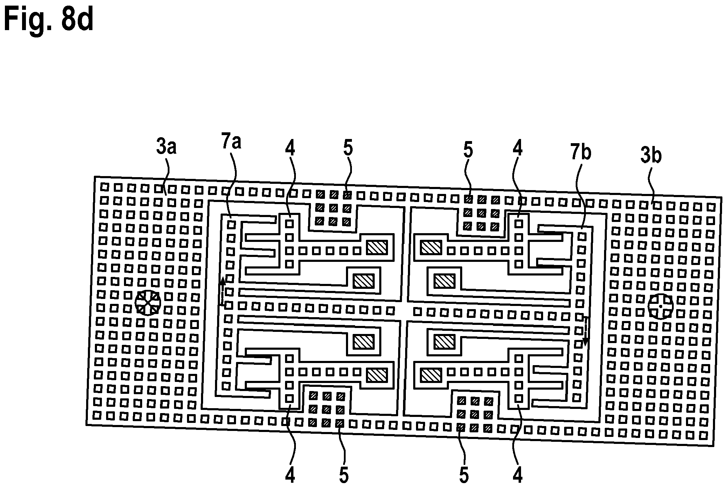

In den **Figuren 8a** bis **8d** ist eine schematische Darstellung einer mikromechanischen Struktur 1 gemäß einer beispielhaften dritten Ausführungsform gezeigt. Dabei stellen die **Figuren 8a** und **8b** die mikromechanische Struktur 1 in der Ruhelage und die **Figuren 8c** und **8d** die mikromechanische Struktur 1 im Fall einer parallel zu einer Projektion der zweiten Achse 102 auf die Haupterstreckungsebene 100 wirkenden Drehrate X dar. Die beispielhafte dritte Ausführungsform weist wie die erste Ausführungsform keine Segmentierung des ersten Corioliselements 3a und des zweiten Corioliselements 3b auf, jedoch vier Detektionseinrichtungen 4 wie die zweite Ausführungsform, wobei zusätzlich sowohl die Antriebseinrichtungen 5 als auch die Detektionseinrichtungen 4 in der Nähe der ersten Achse 101 angeordnet sind, so dass die Aufhängung der Elemente an dem Substrat 2 in einem vergleichsweise schmalen Raumbereich erfolgt, wodurch eine hohe Unempfindlichkeit gegenüber mechanischen Verspannungen des Bauteils beziehungsweise der mikromechanischen Struktur gegeben ist. Außerdem sind in der beispielhaften dritten Ausführungsform das erste Corioliselement 3a und das zweite Corioliselement 3b rahmenartig ausgebildet und umrahmen das erste Auslenkungselement 7a und das zweite Auslenkungselement 7b, während dies bei den beispielhaften ersten und zweiten Ausführungsformen umgekehrt der Fall ist.

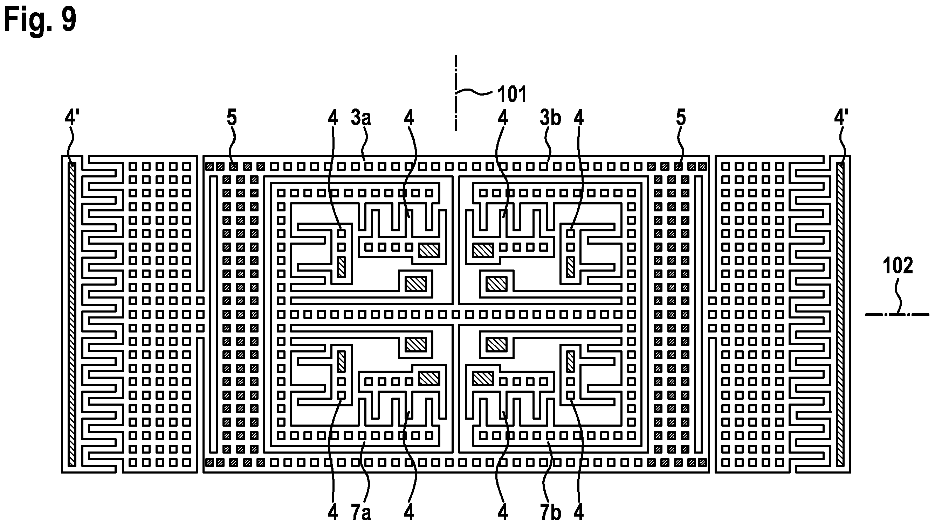

In **Figur** 9 ist eine schematische Darstellung einer mikromechanischen Struktur 1 gemäß einer beispielhaften vierten Ausführungsform dargestellt. Die beispielhafte vierte Ausführungsform weist entsprechend der zweiten Ausführungsform eine Segmentierung des ersten Corioliselements 3a und des zweiten Corioliselements 3b auf und entsprechend der dritten Ausführungsform das innen liegende erste Auslenkungselement 7a und das innen liegende zweite Auslenkungselement 7b, wobei innen liegend meint, dass das Corioliselement 3 rahmenförmig ausgebildet ist und das erste Auslenkungselement 7a und das zweite Auslenkungselement 7b umgibt, wobei gemäß der vierten Ausführungsform auch das von der ersten Achse 101 entfernteste Segment des ersten Corioliselements 3a, also das erste Segment 3a', und des zweiten Corioliselements 3b, also das vierte Segment 3b", zum Eingriff in entsprechende Fingerelektroden von weiteren Detektionseinrichtungen 4' bestimmte Gegenfingerelektroden aufweisen. Zusätzlich dazu weist auch die mikromechanische Struktur 1 gemäß der vierten Ausführungsform zentrale Detektionseinrichtungen 4 auf, die die Auslenkung (beziehungsweise Kraftwirkung) der ähnlich zu den gemäß der dritten Ausführungsform gelagerten ersten Auslenkungselemente 7a und zweiten Auslenkungselemente 7b detektieren.

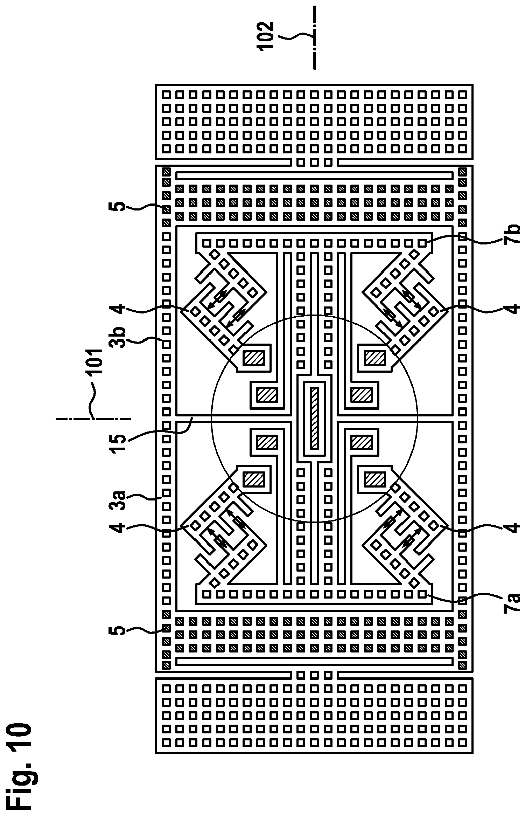

In **Figur 10** ist eine schematische Darstellung gemäß einer beispielhaften fünften Ausführungsform der erfindungsgemäßen mikromechanischen Struktur 1 gezeigt. Die beispielhafte fünfte Ausführungsform entspricht dabei im Wesentlichen der vierten Ausführungsform, wobei hier die Substrataufhängung im Wesentlichen innerhalb eines gedachten Kreises um den Schnittpunkt der ersten Achse 101 und der zweiten Achse 102 realisiert ist, wobei der Kreis einen Radius vorzugsweise weniger als die Hälfte der Erstreckung des ersten Corioliselements 3a in Richtung der zweiten Achse 102, besonders bevorzugt weniger als ein Drittel der Erstreckung des ersten Corioliselements 3a in Richtung der zweiten Achse 102 und ganz besonders bevorzugt weniger als ein Viertel der Erstreckung des ersten Corioliselements 3a in Richtung der zweiten Achse 102, aufweist.. Auch hier weist das erste Corioliselement 3a und das zweite Corioliselement 3b mehrere Segmente auf. Durch die sehr zentrale, Befestigung am Substrat wird in besonderem Maße eine Unempfindlichkeit gegenüber mechanischen und/oder thermischen Verspannungen ermöglicht.

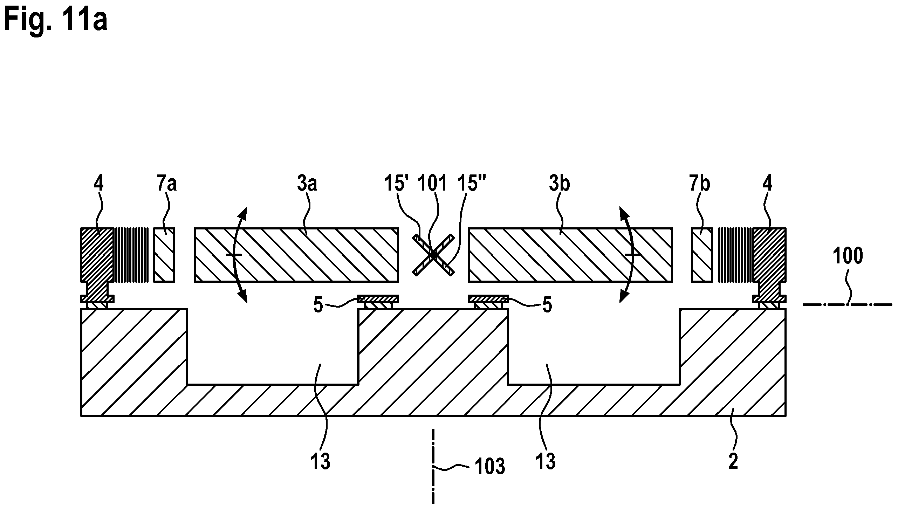

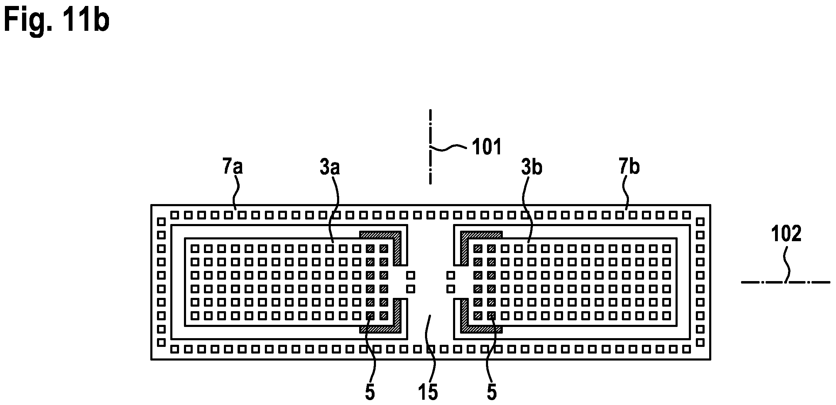

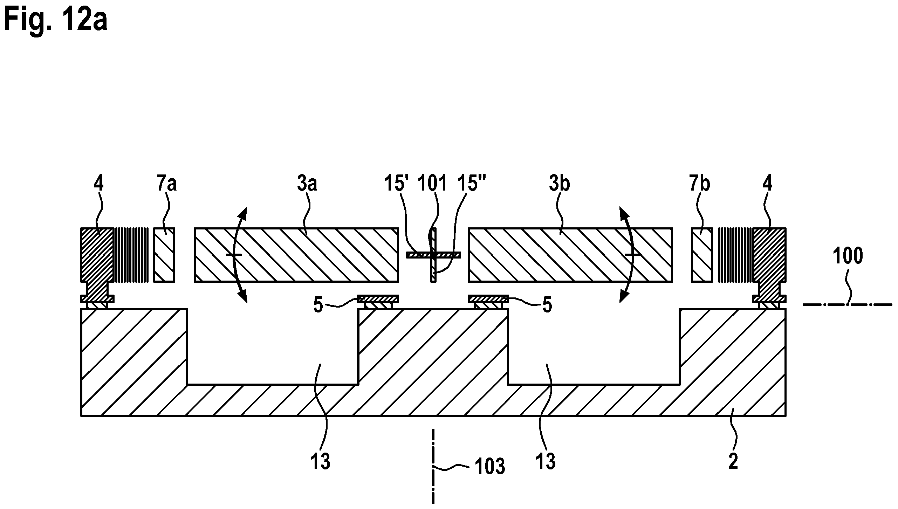

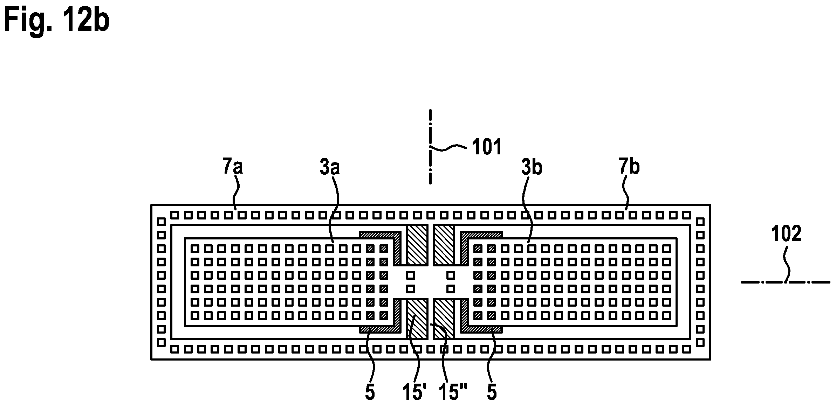

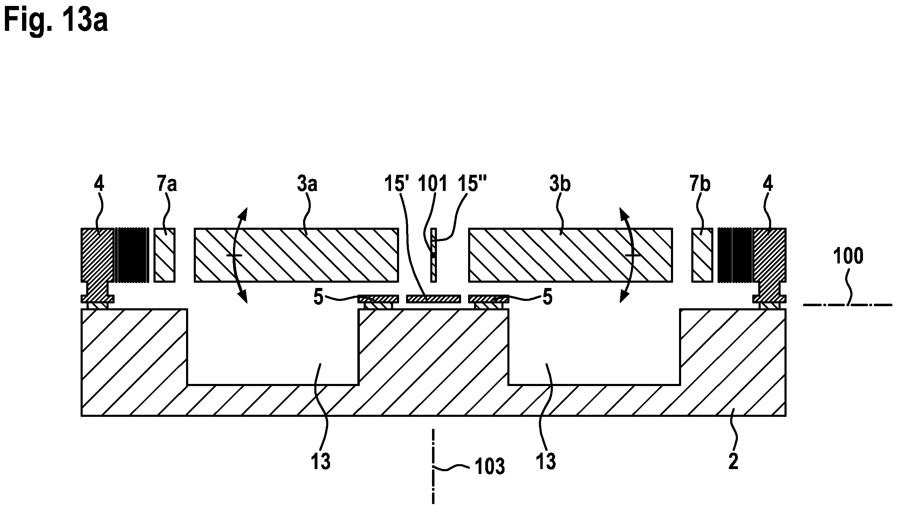

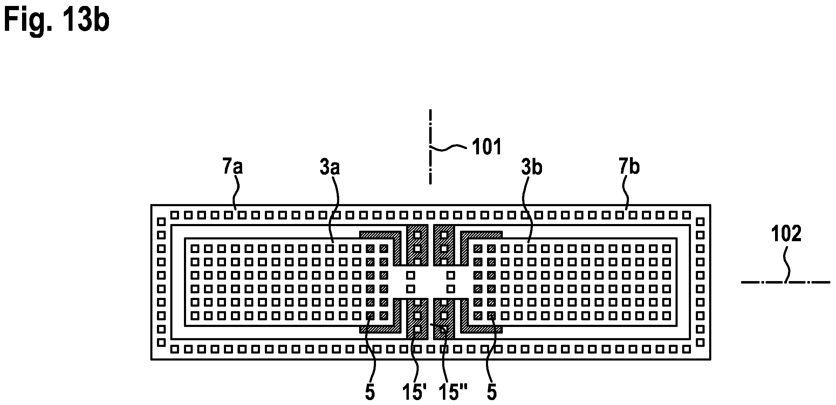

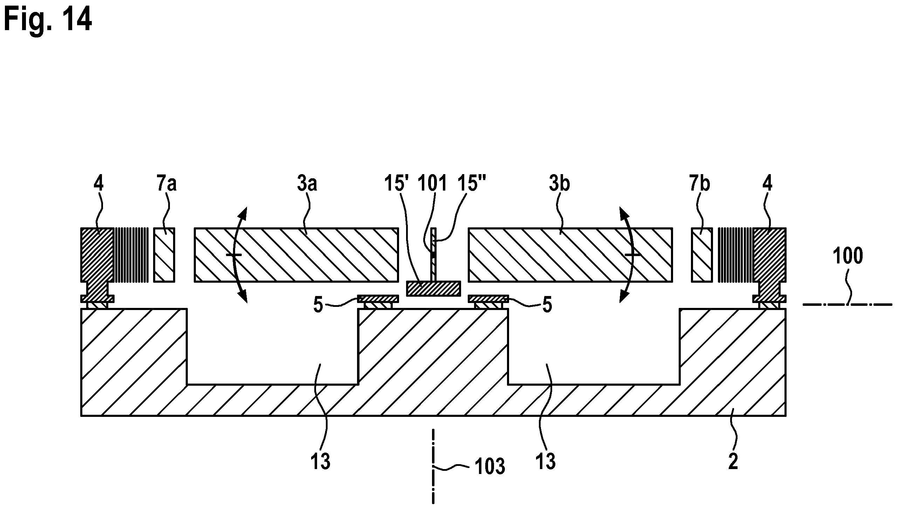

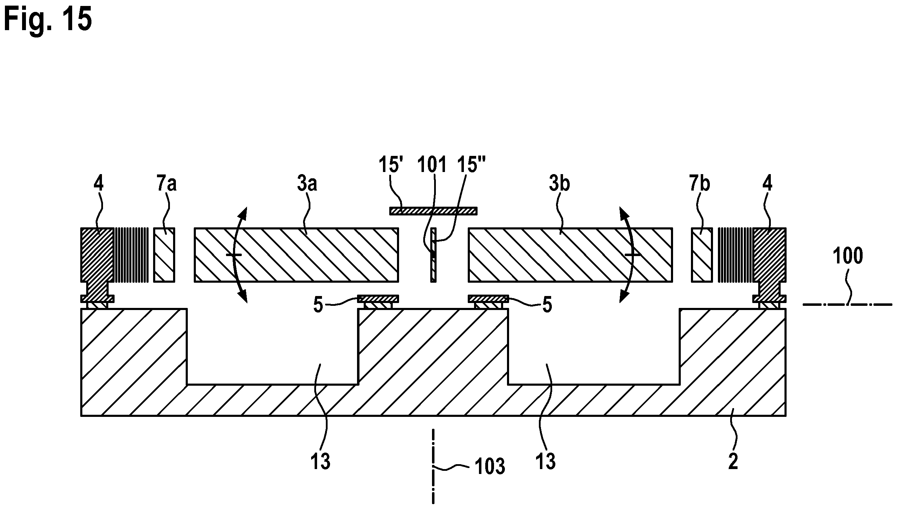

In den **Figuren 11a bis 15** sind schematische Darstellungen gemäß beispielhafter Ausführungsvarianten der erfindungsgemäßen mikromechanischen Struktur 1 hinsichtlich der Torsionsfeder 15 am Beispiel der ersten Ausführungsform gezeigt. Hierbei zeigen die **Figuren 11a****,** **12a****,** **13a****,** **14** **und** **15** Schnittdarstellungen entlang einer Ebene quer zu der ersten Achse 101. Die **Figuren 11b****,** **12b** **und** **13b** zeigen Aufsichten auf die Haupterstreckungsebene 100 des Substrats 2. In allen diesen Ausführungsvarianten weist die Torsionsfeder 15 ein erstes Torsionsfederelement 15' und ein zweites Torsionsfederelement 15" auf, wobei das erste Torsionsfederelement 15' und das zweite Torsionsfederelement 15" entlang der Richtung der ersten Achse 101 eine Haupterstreckungsrichtung aufweisen. Quer zur ersten Achse 101, d.h. im Querschnitt, ist sowohl das erste Torsionsfederelement 15' als auch das zweite Torsionsfederelement 15" im Wesentlichen rechteckförmig ausgebildet, weist also außer der Haupterstreckungsrichtung eine zweite und eine dritte Erstreckungsrichtung auf, wobei die Erstreckung in der zweiten Erstreckungsrichtung jeweils geringer ist als die Erstreckung in die Haupterstreckungsrichtung und wobei die Erstreckung in die dritte Erstreckungsrichtung geringer ist als die Erstreckung in die zweite Erstreckungsrichtung. Die den Querschnitt der Torsionsfederelemente 15', 15" entsprechenden Rechtecke sind in allen Ausführungsvarianten senkrecht zueinander ausgeführt, d.h. ihre jeweiligen zweiten Erstreckungsrichtungen stehen in der Schnittebene senkrecht aufeinander. In den Ausführungsvarianten gemäß der **Figuren 11a****,** **11b****,** **12a** **und** **12b** fallen die Mittelpunkte der dem Querschnitt der Torsionsfederelemente 15', 15" entsprechenden Rechtecke zusammen, d.h. die Torsionsfeder 15 ist im Querschnitt bezüglich der Schnittebene kreuzförmig ausgebildet. In den **Figuren 11a** **und** **11b** sind dabei die zweiten Erstreckungsrichtungen in der Schnittebene etwa um 45° zur Richtung der dritten Achse 103 angeordnet. In den Ausführungsvarianten gemäß der **Figuren 12a** **und** **12b** ist die zweite Erstreckungsrichtung des ersten Torsionsfederelements 15' in der Ruhelage parallel zu der Haupterstreckungsebene 100 und die zweite Erstreckungsrichtung des zweiten Torsionsfederelements 15" in Richtung der dritten Achse 103 angeordnet. Dabei ist das erste Torsionsfederelement 15' insbesondere aus einer weiteren Polysiliziumschicht ausgebildet. In den Ausführungsvarianten gemäß der **Figuren 13a****,** **13b****,** **14** **und** **15** ist das erste Torsionsfederelement 15' parallel zu der Haupterstreckungsebene 100 angeordnet und das zweite Torsionsfederelement 15" ist entlang der Richtung der dritten Achse 103 angeordnet, wobei die Mittelpunkte der den Querschnitt der Torsionsfederelemente 15', 15" entsprechenden Rechtecke nicht zusammenfallen und das erste Torsionsfederelement 15' in den **Figuren 13a****,** **13b** **und** **14** unterhalb, d.h. im Bereich der dem Substrat zugewandten Seite des ersten Corioliselements 3a und des zweiten Corioliselements 3b, und in **Figur 15** oberhalb, d.h. im Bereich der dem Substrat abgewandten Seite des ersten Corioliselements 3a und des zweiten Corioliselements 3b, des zweiten Torsionsfederelements 15" angeordnet ist. In den Ausführungsvarianten gemäß der **Figuren 13a** **und** **13b** ist das erste Torsionsfederelement 15' insbesondere aus der Polysiliziumschicht 11 ausgebildet, wodurch vorteilhafterweise ein zusätzlicher Herstellungsschritt entfällt. In den Ausführungsvarianten gemäß der **Figuren 14** **und** **15** ist das erste Torsionsfederelement 15' insbesondere aus einer weiteren Polysiliziumschicht ausgebildet, wobei die weitere Polysiliziumschicht und damit das erste Torsionsfederelement 15' dabei in ihrer Dicke (respektive in der dritten Erstreckungsrichtung des ersten Torsionsfederelements 15') bei der Herstellung derart anpassbar ist bei der Herstellung, dass das erste Torsionsfederelement 15' bestimmte Charakteristika, insbesondere eine bestimmte Federkonstante, aufweist. In der Ausführungsvariante gemäß der **Figur 14** sind das erste Torsionsfederelement 15' und das zweite Torsionsfederelement 15" über ihre gesamte Erstreckung entlang der Haupterstreckungsrichtung hinweg (entsprechend der Richtung der senkrecht zu der Zeichenebene verlaufenden ersten Achse 101) miteinander verbunden oder nur an den jeweiligen Aufhängungspunkten an dem Substrat 2 und im Bereich der Anbindung des ersten Corioliselements 3a und des zweiten Corioliselements 3b an die Torsionsfeder 15. Jede der beschriebenen Ausführungsvarianten ist jeweils mit der ersten bis fünften Ausführungsform kombinierbar.

In allen Ausführungsformen ist es bevorzugt, dass die Rotationsschwingung der Corioliselemente resonant oder teilweise resonant erfolgt. Hierdurch wird eine noch genauere Messung ermöglicht. Besonders bevorzugt ist die Eigenfrequenz der Detektionseinrichtung veränderbar, insbesondere ist die Eigenfrequenz der Detektionseinrichtung auf die Antriebsfrequenz, mit der das erste und zweite Corioliselement angetrieben werden, einstellbar. Dadurch ist es in besonders vorteilhafter Weise möglich, den Drehratensensor in einem besonders empfindlichen, resonanten Zustand zu betreiben.

## Patentansprüche

1. Mikromechanische Struktur (1), insbesondere Drehratensensor, mit einem eine Haupterstreckungsebene (100) aufweisenden Substrat (2), einem ersten Corioliselement (3a), einem zweiten Corioliselement (3b), wenigstens einer Antriebseinrichtung (5) zur Auslenkung des ersten Corioliselements (3a) und des zweiten Corioliselements (3b) aus einer Ruhelage und wenigstens einer Detektionseinrichtung (4), wobei das erste Corioliselement (3a) bezüglich einer parallel zur Haupterstreckungsebene (100) verlaufenden ersten Achse (101) massensymmetrisch zu dem zweiten Corioliselement (3b) ausgebildet ist, wobei das erste Corioliselement (3a) und das zweite Corioliselement (3b) eine gemeinsame Haupterstreckungsebene aufweisen, wobei die gemeinsame Haupterstreckungsebene in der Ruhelage parallel zu der Haupterstreckungsebene (100) des Substrats verläuft, wobei das erste Corioliselement (3a) und das zweite Corioliselement (3b) bezüglich einer senkrecht zur ersten Achse (101) verlaufenden zweiten Achse (102) jeweils massensymmetrisch ausgebildet sind, wobei das erste Corioliselement (3a) und das zweite Corioliselement (3b) durch die Antriebseinrichtung (5) zu einer Rotationsschwingung um die erste Achse (101) antreibbar sind, wobei das erste Corioliselement (3a) und das zweite Corioliselement (3b) im Fall einer parallel zu der Projektion der zweiten Achse (102) auf die Haupterstreckungsebene (100) wirkenden Drehrate (X) zu einer Kraftwirkung der Corioliskraft im Sinne einer Rotationsschwingung um eine senkrecht zu der Haupterstreckungsebene (100) sich erstreckende und durch den Schnittpunkt der ersten Achse (101) und der zweiten Achse (102) verlaufende dritte Achse (103) auslenkbar sind, wobei die mikromechanische Struktur wenigstens ein erstes Auslenkungselement (7a) und wenigstens ein zweites Auslenkungselement (7b) aufweist, wobei das erste Auslenkungselement (7a) bezüglich der ersten Achse (101) massensymmetrisch zu dem zweiten Auslenkungselement (7b) und bezüglich der zweiten Achse (102) massensymmetrisch zu sich selbst ausgebildet ist und das zweite Auslenkungselement (7b) bezüglich der ersten Achse (101) massensymmetrisch zu dem ersten Auslenkungselement (7a) und bezüglich der zweiten Achse (102) massensymmetrisch zu sich selbst ausgebildet ist, wobei das erste Auslenkungselement (7a) wenigstens mit dem ersten Corioliselement (3a) und das zweite Auslenkungselement (7b) wenigstens mit dem zweiten Corioliselement (3b) derart gekoppelt ist, dass die Kraftwirkung der Corioliskraft auf das erste Corioliselement (3a) und das zweite Corioliselement (3b) im Sinne einer Rotationsschwingung des ersten Auslenkungselements (7a) und des zweiten Auslenkungselements (7b) um die dritte Achse (103) durch die Detektionseinrichtung (4) detektierbar ist, dadurch gekennzeichtnet, dass die Antriebseinrichtung (5) in der Nähe der ersten Achse (101) befindliche Flächenelektroden mit einer Haupterstreckungsebene parallel zu der Haupterstreckungsebene (100) des Substrats aufweist, und die Entfernung der Antriebseinrichtung (5) zu der ersten Achse (101) weniger als 40% der Erstreckung des ersten und/oder zweiten Corioliselements (3a,3b) entlang der zweiten Achse (102) beträgt, wobei das Substrat (2) derartige Ausnehmungen (13) aufweist, dass das erste Corioliselement (3a) und das zweite Corioliselement (3b) einen größeren maximalen Auslenkwinkel der Rotationsschwingung aufweisen können als es ohne Ausnehmungen der Fall ist.

2. Mikromechanische Struktur (1) nach Anspruch 1, **dadurch gekennzeichnet, dass** die erste Achse (101) wenigstens eine ein- oder mehrteilige Torsionsfeder umfasst, wobei insbesondere die Länge der Torsionsfeder größer als die Höhe der Torsionsfeder und wobei die Höhe der Torsionsfeder größer als die Breite der Torsionsfeder ist.

3. Mikromechanische Struktur (1) nach einem der vorhergehenden Ansprüche, **dadurch gekennzeichnet, dass** die mikromechanische Struktur (1) durch einen oberflächenmikromechanischen Prozess herstellbar ist.

4. Mikromechanische Struktur (1) nach einem der vorhergehenden Ansprüche, **dadurch gekennzeichnet, dass** die Detektionseinrichtung (4) Elektroden aufweist.

5. Mikromechanische Struktur (1) nach Anspruch 5, **dadurch gekennzeichnet, dass** die Detektionseinrichtung in einer Kammstruktur angeordnete erste Fingerelektroden aufweist, wobei das erste Auslenkungselement (7a) und das zweite Auslenkungselement (7b) in die ersten Fingerelektroden eingreifende zweite Fingerelektroden aufweisen.

6. Mikromechanische Struktur (1) nach einem der vorhergehenden Ansprüche, **dadurch gekennzeichnet, dass** die Detektionseinrichtung (4) und/oder das erste Corioliselement (3a) und das zweite Corioliselement (3b) und/oder insbesondere das erste Auslenkungselement (7a) und das zweite Auslenkungselement (7b) im Wesentlichen umfänglich um wenigstens eine zentrale Substrataufhängung angeordnet sind.

7. Mikromechanische Struktur (1) nach einem der vorhergehenden Ansprüche, **dadurch gekennzeichnet, dass** das erste Corioliselement (3a) mehrere Segmente aufweist und das zweite Corioliselement (3b) mehrere Segmente aufweist, wobei insbesondere benachbarte Segmente des ersten Corioliselements (3a) durch Torsionsfedern gekoppelt sind und benachbarte Segmente des zweiten Corioliselements (3b) durch Torsionsfedern gekoppelt sind.

8. Mikromechanische Struktur (1) nach einem der vorhergehenden Ansprüche, **dadurch gekennzeichnet, dass** die Kopplung des ersten Corioliselements (3a) und des zweiten Corioliselements (3b) mit dem Substrat (2) weich bezüglich einer Rotationsschwingung um die erste Achse (101) und bezüglich einer Rotationsschwingung um die dritte Achse (103) und hart bezüglich einer Rotationsschwingung um die zweite Achse (102) ausgebildet, und die Kopplung des ersten Auslenkungselements (7a) und des zweiten Auslenkungselements (7b) mit dem Substrat (2) ist weich bezüglich einer Rotationsschwingung um die dritte Achse (103) und hart bezüglich einer Rotationsschwingung um die erste Achse (101) und bezüglich einer Rotationsschwingung um die zweite Achse (102) ausgebildet, und die Kopplung des ersten Auslenkungselements (7a) mit dem ersten Corioliselement (3a) und des zweiten Auslenkungselements (7b) mit dem zweiten Corioliselement (3b) ist weich bezüglich einer Rotationsschwingung um die erste Achse (101) und hart bezüglich einer Rotationsschwingung um die zweite Achse (102) und bezüglich einer Rotationsschwingung um die dritte Achse (103) ausgebildet.

## Claims

1. Micromechanical structure (1), in particular a rate of rotation sensor, comprising a substrate (2) which has a main plane of extent (100), comprising a first Coriolis element (3a), comprising a second Coriolis element (3b), comprising at least one drive device (5) for deflecting the first Coriolis element (3a) and the second Coriolis element (3b) out of a rest position, and comprising at least one detection device (4), wherein the first Coriolis element (3a) is designed to be symmetrical in terms of mass in relation to the second Coriolis element (3b) with respect to a first axis (101) which runs parallel to the main plane of extent (100), wherein the first Coriolis element (3a) and the second Coriolis element (3b) have a common main plane of extent, wherein, in the rest position, the common main plane of extent runs parallel to the main plane of extent (100) of the substrate, wherein the first Coriolis element (3a) and the second Coriolis element (3b) are each designed so as to be symmetrical in terms of mass with respect to a second axis (102) which runs perpendicular to the first axis (101), wherein the first Coriolis element (3a) and the second Coriolis element (3b) can be driven by the drive device (5) so as to perform a rotational oscillation about the first axis (101), wherein, in the case of a rate of rotation (X) which acts parallel to the projection of the second axis (102) onto the main plane of extent (100), the first Coriolis element (3a) and the second Coriolis element (3b) can be deflected to realize a force action of the Coriolis force for a rotational oscillation about a third axis (103) which extends perpendicular to the main plane of extent (100) and runs through the point of intersection of the first axis (101) and the second axis (102), wherein the micromechanical structure has at least one first deflection element (7a) and at least one second deflection element (7b), wherein the first deflection element (7a) is designed to be symmetrical in terms of mass to the second deflection element (7b) with respect to the first axis (101) and symmetrical in terms of mass to itself with respect to the second axis (102), and the second deflection element (7b) is designed to be symmetrical in terms of mass to the first deflection element (7a) with respect to the first axis (101) and symmetrical in terms of mass to itself with respect to the second axis (102), wherein the first deflection element (7a) is coupled at least to the first Coriolis element (3a) and the second deflection element (7b) is coupled at least to the second Coriolis element (3b) in such a way that the force action of the Coriolis force on the first Coriolis element (3a) and the second Coriolis element (3b) for a rotational oscillation of the first deflection element (7a) and of the second deflection element (7b) about the third axis (103) can be detected by the detection device (4), **characterized in that** the drive device (5) has flat electrodes which are located in the vicinity of the first axis (101) and have a main plane of extent parallel to the main plane of extent (100) of the substrate, and the distance of the drive device (5) from the first axis (101) is less than 40% of the extent of the first and/or second Coriolis element (3a, 3b) along the second axis (102), wherein the substrate (2) has recesses (13) of the kind such that the first Coriolis element (3a) and the second Coriolis element (3b) can have a larger maximum deflection angle for the rotational oscillation than is the case without recesses.

2. Micromechanical structure (1) according to Claim 1, **characterized in that** the first axis (101) comprises at least one single- or multiple-part torsion spring, wherein in particular the length of the torsion spring is greater than the height of the torsion spring, and wherein the height of the torsion spring is greater than the width of the torsion spring.

3. Micromechanical structure (1) according to either of the preceding claims, **characterized in that** the micromechanical structure (1) can be produced using a surface micromechanical process.

4. Micromechanical structure (1) according to one of the preceding claims, **characterized in that** the detection device (4) has electrodes.

5. Micromechanical structure (1) according to Claim 5, **characterized in that** the detection device has first finger electrodes which are arranged in a comb structure, wherein the first deflection element (7a) and the second deflection element (7b) have second finger electrodes which engage into the first finger electrodes.

6. Micromechanical structure (1) according to one of the preceding claims, **characterized in that** the detection device (4) and/or the first Coriolis element (3a) and the second Coriolis element (3b) and/or in particular the first deflection element (7a) and the second deflection element (7b) are arranged substantially circumferentially around at least one central substrate suspension means.

7. Micromechanical structure (1) according to one of the preceding claims, **characterized in that** the first Coriolis element (3a) has a plurality of segments, and the second Coriolis element (3b) has a plurality of segments, wherein in particular adjacent segments of the first Coriolis element (3a) are coupled by torsion springs and adjacent segments of the second Coriolis element (3b) are coupled by torsion springs.

8. Micromechanical structure (1) according to one of the preceding claims, **characterized in that** the coupling of the first Coriolis element (3a) and of the second Coriolis element (3b) to the substrate (2) is soft with respect to a rotational oscillation about the first axis (101) and with respect to a rotational oscillation about the third axis (103) and hard with respect to a rotational oscillation about the second axis (102), and the coupling of the first deflection element (7a) and of the second deflection element (7b) to the substrate (2) is soft with respect to a rotational oscillation about the third axis (103) and hard with respect to a rotational oscillation about the first axis (101) and with respect to a rotational oscillation about the second axis (102), and the coupling of the first deflection element (7a) to the first Coriolis element (3a) and of the second deflection element (7b) to the second Coriolis element (3b) is soft with respect to a rotational oscillation about the first axis (101) and hard with respect to a rotational oscillation about the second axis (102) and with respect to a rotational oscillation about the third axis (103).

## Revendications

1. Structure micromécanique (1), en particulier capteur de vitesse de rotation, avec un substrat (2) présentant un plan d'extension principal (100), un premier élément de Coriolis (3a), un second élément de Coriolis (3b), au moins un dispositif d'entraînement (5) pour la déviation du premier élément de Coriolis (3a) et du second élément de Coriolis (3b) hors d'une position de repos et au moins un dispositif de détection (4), dans laquelle le premier élément de Coriolis (3a) est formé de façon symétrique en masse vis-à-vis du second élément de Coriolis (3b) par rapport à un axe (101) s'étendant parallèlement au plan d'extension principal (100), dans laquelle le premier élément de Coriolis (3a) et le second élément de Coriolis (3b) présentent un plan d'extension principal commun, dans laquelle le plan d'extension principal commun s'étend dans la position de repos parallèlement au plan d'extension principal (100) du substrat, dans laquelle le premier élément de Coriolis (3a) et le second élément de Coriolis (3b) sont formés respectivement de façon symétrique en masse par rapport à un deuxième axe (102) s'étendant perpendiculairement au premier axe (101), dans laquelle le premier élément de Coriolis (3a) et le second élément de Coriolis (3b) peuvent être entraînés par le dispositif d'entraînement (5) dans une oscillation rotative autour du premier axe (101), dans laquelle le premier élément de Coriolis (3a) et le second élément de Coriolis (3b), dans le cas d'une vitesse de rotation (X) agissant parallèlement à la projection du deuxième axe (102) sur le plan d'extension principal (100), peuvent être déviés vers un effet dynamique de la force de Coriolis dans le sens d'une oscillation rotative autour d'un troisième axe (103) s'étendant perpendiculairement au plan d'extension principal (100) et passant par le point d'intersection du premier axe (101) et du deuxième axe (102), dans laquelle la structure micromécanique présente au moins un premier élément de déviation (7a) et au moins un second élément de déviation (7b), dans laquelle le premier élément de déviation (7a) est formé de façon symétrique en masse vis-à-vis du second élément de déviation (7b) par rapport au premier axe (101) et de façon symétrique en masse vis-à-vis de lui-même par rapport au deuxième axe (102) et le second élément de déviation (7b) est formé de façon symétrique en masse vis-à-vis du premier élément de déviation (7a) par rapport au premier axe (101) et de façon symétrique en masse vis-à-vis de lui-même par rapport au deuxième axe (102), dans laquelle le premier élément de déviation (7a) est couplé au moins au premier élément de Coriolis (3a) et le second élément de déviation (7b) est couplé au moins au second élément de Coriolis (3b) de telle manière que l'effet dynamique de la force de Coriolis sur le premier élément de Coriolis (3a) et le second élément de Coriolis (3b) dans le sens d'une oscillation rotative du premier élément de déviation (7a) et du second élément de déviation (7b) puisse être détecté par le dispositif de détection (4), **caractérisée en ce que** le dispositif d'entraînement (5) présente des électrodes plates se trouvant à proximité du premier axe (101) avec un plan d'extension principal parallèle au plan d'extension principal (100) du substrat, et l'éloignement du dispositif d'entraînement (5) du premier axe (101) vaut moins de 40 % de l'extension du premier et/ou du second éléments de Coriolis (3a, 3b) le long du deuxième axe (102), dans laquelle le substrat (2) présente des évidements (13) tels que le premier élément de Coriolis (3a) et le second élément de Coriolis (3b) puissent présenter un plus grand angle de déviation maximal de l'oscillation rotative que cela est le cas sans évidements.

2. Structure micromécanique (1) selon la revendication 1, **caractérisée en ce que** le premier axe (101) comprend au moins un ressort de torsion en une ou plusieurs parties, dans laquelle en particulier la longueur du ressort de torsion est plus grande que la hauteur du ressort de torsion et dans laquelle la hauteur du ressort de torsion est plus grande que la largeur du ressort de torsion.

3. Structure micromécanique (1) selon l'une quelconque des revendications précédentes, **caractérisée en ce que** la structure micromécanique (1) peut être produite par un procédé micromécanique de surface.

4. Structure micromécanique (1) selon l'une quelconque des revendications précédentes, **caractérisée en ce que** le dispositif de détection (4) présente des électrodes.

5. Structure micromécanique (1) selon la revendication 5, **caractérisée en ce que** le dispositif de détection présente des premières électrodes en doigt disposées en une structure de peigne, dans laquelle le premier élément de déviation (7a) et le second élément de déviation (7b) présentent des secondes électrodes en doigt s'engageant dans les premières électrodes en doigt.

6. Structure micromécanique (1) selon l'une quelconque des revendications précédentes, **caractérisée en ce que** le dispositif de détection (4) et/ou le premier élément de Coriolis (3a) et le second élément de Coriolis (3b) et/ou en particulier le premier élément de déviation (7a) et le second élément de déviation (7b) sont disposés en périphérie autour d'au moins une suspension centrale de substrat.

7. Structure micromécanique (1) selon l'une quelconque des revendications précédentes, **caractérisée en ce que** le premier élément de Coriolis (3a) présente plusieurs segments et le second élément de Coriolis (3b) présente plusieurs segments, dans laquelle en particulier des segments voisins du premier élément de Coriolis (3a) sont couplés par des ressorts de torsion et des segments voisins du second élément de Coriolis (3b) sont couplés par des ressorts de torsion.

8. Structure micromécanique (1) selon l'une quelconque des revendications précédentes, **caractérisée en ce que** le couplage du premier élément de Coriolis (3a) et du second élément de Coriolis (3b) avec le substrat (2) est souple vis-à-vis d'une oscillation rotative autour du premier axe (101) et vis-à-vis d'une oscillation rotative autour du troisième axe (103) et dur vis-à-vis d'une oscillation rotative autour du deuxième axe (102), et le couplage du premier élément de déviation (7a) et du second élément de déviation (7b) avec le substrat (2) est souple vis-à-vis d'une oscillation rotative autour du troisième axe (103) et dur vis-à-vis d'une oscillation rotative autour du premier axe (101) et vis-à-vis d'une oscillation rotative autour du deuxième axe (102), et le couplage du premier élément de déviation (7a) avec le premier élément de Coriolis (3a) et du second élément de déviation (7b) avec le second élément de Coriolis (3b) est souple vis-à-vis d'une oscillation rotative autour du premier axe (101) et dur vis-à-vis d'une oscillation rotative autour du deuxième axe (102) et vis-à-vis d'une oscillation rotative autour du troisième axe (103).
